# EUROPÄISCHE PATENTSCHRIFT

(11) **EP 2 595 886 B1**
(45) Veröffentlichungstag und Bekanntmachung des Hinweises auf die Patenterteilung: **29.10.2014**
(21) Anmeldenummer: 11748302.4
(22) Anmeldetag: 14.07.2011
(51) Int. Cl.: B64D 43/00, B64D 45/00, B64F 5/00, G01M 5/00, G01M 17/00, B29C 73/10

(54) **ÜBERWACHUNGSVORRICHTUNG FÜR REPARATURPATCHES, REPARATURKIT SOWIE VERFAHREN ZUM ÜBERWACHEN EINES REPARATURPATCHES**
MONITORING DEVICE FOR REPAIR PATCHES, REPAIR KIT, AND METHOD FOR MONITORING A REPAIR PATCH
DISPOSITIF DE SURVEILLANCE POUR DES PATCHS DE RÉPARATION, KIT DE RÉPARATION ET PROCÉDÉ DE SURVEILLANCE D'UN PATCH DE RÉPARATION

(30) Priorität: 23.07.2010 DE 102010032093
(43) Veröffentlichungstag der Anmeldung: 29.05.2013
(73) Patentinhaber: Airbus Defence and Space GmbH, 85521 Ottobrunn (DE)
(72) Erfinder: BECKER, Thomas, 27711 Osterholz-Scharmbeck (DE); PRECHTEL, Ulrich, 81739 München (DE); KLAUE, Jirka, 85521 Ottobrunn (DE); KLUGE, Martin, 86343 Königsbrunn (DE); SABATER, Jordi, 81667 München (DE); SCHALK, Josef, 84051 Altheim (DE)
(74) Vertreter: Flügel Preissner Kastel Schober
(86) Internationale Anmeldenummer: PCT/EP2011/062075
(87) Internationale Veröffentlichungsnummer: WO 2012/010496

(56) Entgegenhaltungen:
- WO-A1-2009/062635
- US-A1- 2007 100 582
- US-A1- 2007 204 699

## Beschreibung

Die vorliegende Erfindung betrifft eine Überwachungsvorrichtung für ein Reparaturpatch, das zum Reparieren eines Defekts an oder in einer Wandung eines Luftfahrzeugs einsetzbar ist und eine Sensoreinrichtung zum Erfassen seiner Eigenschaften aufweist. Darüber hinaus betrifft die vorliegende Erfindung ein in oder an einer Wandung eines Luftfahrzeugs zur Reparatur von Defekten einsetzbares Reparaturkit mit einem Reparaturpatch. Ebenso betrifft die vorliegende Erfindung ein Verfahren zum Überwachen eines Reparaturpatches in oder an einer Wandung eines Luftfahrzeugs mittels einer Überwachungsvorrichtung.

Defekte in Wandungen von Luftfahrzeugen können durch eine Vielzahl von Ereignissen, beispielsweise durch kleine Zusammenstöße mit Versorgungsfahrzeugen am Boden oder mit Vögeln in der Luft entstehen. Auch verrutschende Ladung kann Wandungen innerhalb des Luftfahrzeugs beschädigen.

Je nach dem in der beschädigten Wandung verwendeten Material sind verschiedene Reparaturverfahren bekannt. Häufig wird ein Reparaturpatch (Doppler) als Flicken über den Defekt gelegt. Das Reparaturpatch soll unter Anderem verhindern, dass sich die Defektstelle vergrößert und soll sie gegebenenfalls abdichten, um das Eindringen von Verschmutzungen und Feuchtigkeit zu verhindern.

Die verwendeten Reparaturpatches unterliegen, wie jedes Material, das mechanischer Belastung ausgesetzt ist, einem Verschleiß.

WO 2009/062635 A1 zeigt eine Überwachungsvorrichtung zur automatischen Überwachung eines Teils einer Außenwand eines Luftfahrzeugs auf Schäden. Die Überwachungsvorrichtung weist ein Sensormodul auf, welches Messdaten drahtlos und ohne externe Energieversorgung an eine zentrale Auswerteeinheit übertragen kann. Zur Energieversorgung ist die Überwachungsvorrichtung mit einem thermoelektrischen Generator versehen. Eine Sende-/Empfangseinrichtung mit einer Antenne wird zur Übermittlung der Messdaten verwendet.

US 2007/0204699 A1 beschreibt eine Belastungsmessungsanordnung, die zur Überwachung eines mechanischen Bauteils, z.B. eines Flugzeugs, dient. Dazu weist die Belastungsmessungsanordnung eine Messvorrichtung auf, die Druck, Wärme, Licht und dergleichen messen kann. Zur Energieversorgung ist eine Energiegewinnungseinrichtung vorgesehen, die beispielsweise ein piezoelektrisches Element ist. Die Messwerte werden mittels eines Kommunikationssystems und/oder einer Antenne übertragen.

US 2007/0100582 offenbart ein Inspektionselement, das zur Überwachung eines Reparaturpatches und einer Anordnung in oder für ein Flugzeug verwendet werden kann. Das Inspektionselement weist Sensoren auf, die das Reparaturpatch überwachen. Zur Energieversorgung werden dünne flexible Batterien vorgeschlagen. Die Übertragung der von den Sensoren gemessenen Daten erfolgt mittels eines Netzwerks.

Die Erfindung geht auf die **Aufgabe** zurück, eine verbesserte Vorrichtung und ein verbessertes Verfahren zum Überwachen der Belastung solcher Reparaturpatches zu schaffen. Darüber hinaus soll ein Reparaturkit bereitgestellt werden, das den Einsatz der Vorrichtung und des Verfahrens vereinfacht.

Zur **Lösung** dieser Aufgabe wird eine Überwachungsvorrichtung gemäß dem Anspruch 1 vorgeschlagen. Das Reparaturpatch, das zum Reparieren eines Defekts an oder in einer Wandung eines Luftfahrzeugs einsetzbar ist, umfasst eine Sensoreinrichtung zum Erfassen von Eigenschaften des in der Wandung eingesetzten Reparaturpatches, eine Energieversorgungseinrichtung zum Versorgen wenigstens der Sensoreinrichtung mit Energie, eine Kommunikationseinrichtung, um ein Auslesen der Sensordaten zu ermöglichen und eine Datenverarbeitungseinrichtung zur Verarbeitung der von der Sensoreinrichtung generierten Daten. Die Überwachungsvorrichtung ist derart ausgebildet, dass das Erfassen der Eigenschaften des Reparaturpatches einmal pro Flug in einer vorbestimmten Flugphase erfolgt. Die Datenverarbeitungseinrichtung ist dabei derart ausgebildet, dass zum Erfassen des Beginns des Erfassens der Eigenschaften des Reparaturpatches die Energieabgabe der Energieversorgungseinrichtung überwacht wird und anhand der Information über die Energieabgabe die vorbestimmte Flugphase identifiziert wird

Die erfindungsgemäße Überwachungsvorrichtung erlaubt es, anhand der gemessenen Eigenschaften des Reparaturpatches die mechanische Belastung desselben sowie etwaige Überbelastungen und Verschleißerscheinungen zu erkennen.

Vorteilhafte Ausgestaltungen sind Gegenstand der Unteransprüche.

Die Energieversorgungseinrichtung weist vorteilhaft einen thermoelektrischen Generator auf. Dadurch kann der Temperaturunterschied zwischen der Außenseite des Luftfahrzeugs und der Innenseite des Luftfahrzeugs zur Energieerzeugung genutzt werden. Eine Infrastruktur, um die Überwachungsvorrichtung mit Energie zu versorgen, ist in oder an dem Luftfahrzeug somit nicht mehr notwendig. Diese verschleißfreie Energieerzeugung erlaubt zusätzlich eine lange Lebensdauer der Überwachungsvorrichtung. Darüber hinaus ist die Energieversorgung wartungsfrei, da keinerlei verbrauchter Energiespeicher ausgetauscht werden muss.

Die Energieversorgungseinrichtung kann für den thermoelektrischen Generator eine Wärmespeichervorrichtung aufweisen. Dadurch wird eine Energieerzeugung auch an Stellen ermöglicht, an denen der thermoelektrische Generator keinen Kontakt zu einer wärmenden Innenseite hat. Sobald das Luftfahrzeug seine Höhe verändert, bildet sich zwischen der Außenseite und der Wärmespeichervorrichtung eine Temperaturdifferenz aus, welche der thermoelektrische Generator Energiegewinnung nutzen kann.

Zum Speichern der Sensordaten kann eine Datenspeichereinrichtung vorgesehen werden. Dadurch ist es möglich, die Sensordaten zwischenzuspeichern und zu einem geeigneten Zeitpunkt auszulesen. Somit ist es nicht notwendig, in dem Luftfahrzeug eine Infrastruktur zum Auslesen der Sensordaten bereitzuhalten und diese in dem Luftfahrzeug zu verarbeiten oder zu speichern. Daher sind mit einer solchen Überwachungsvorrichtung auch Luftfahrzeuge ausrüstbar, bei denen keine geeignete Kommunikationsinfrastruktur vorgesehen ist.

Die Kommunikationseinrichtung kann vorteilhaft zur drahtlosen Kommunikation ausgebildet sein. Dadurch ist es nicht mehr notwendig, elektrische Anschlüsse an der Überwachungsvorrichtung vorzusehen, die wiederum zum Auslesen von Sensordaten zugänglich sein müssten, was unter Berücksichtigung schädlicher Umwelteinflüsse an einer Reparaturstelle nur mit sehr komplexen Maßnahmen zu bewerkstelligen ist.

Eine Datenverarbeitungseinrichtung wird zur Verarbeitung der Sensordaten vorgesehen. Die Datenverarbeitungseinrichtung kann eine Vielzahl von Aufgaben bei der Koordinierung der Einrichtungen erfüllen. Sie kann die Sensordaten vorverarbeiten und eine für die Messung interessante Messphase bestimmen.

Die Datenverarbeitungseinrichtung ist derart ausgebildet, dass zur Erkennung einer Messphase die Energieabgabe der Energieversorgungseinrichtung überwacht wird und anhand der Information über die Energieabgabe eine gewünschte Flugphase identifiziert wird. Insbesondere bei Verwendung eines thermoelektrischen Generators in der Energieversorgungseinrichtung kann anhand der Energieabgabe dieses Generators bestimmt werden, in welcher Flugphase sich das Luftfahrzeug befindet. Bestimmte Flugphasen, die bezüglich der Belastung des Reparaturpatches von besonderem Interesse sind, können somit eine Messphase auslösen.

Die Datenverarbeitungseinrichtung kann die Sensordaten zur Speicherung in der Datenspeichereinrichtung komprimieren. Dadurch kann die Datenspeichereinrichtung geringere Bandbreite notwendig.

Die Sensoreinrichtung ist vorteilhaft zur Ermittlung einer mechanischen Spannung ausgebildet. Durch Messung der mechanischen Spannung kann unter anderem überprüft werden, ob sich der Zustand der Defektstelle weiter verschlechtert.

Die Kommunikationseinrichtung ist vorteilhaft fremdspeisbar. Dadurch wird der zum Auslesen notwendige Aufwand reduziert, da zum Betrieb der Kongregationseinrichtung keine weitere Energieversorgung notwendig ist.

Die Wandung ist vorteilhaft eine Außenwandung des Luftfahrzeugs. Die Außenwandung ist eines der strukturell wichtigsten Teile eines Luftfahrzeugs, so dass die Überwachung von Reparaturstellen hier besondere Priorität genießt. Darüber hinaus wird die Aufgabe durch ein in oder an einer Wandung eines Luftfahrzeugs zur Reparatur von Defekten einsetzbares Reparaturkit, umfassend ein Reparaturpatch zum Reparieren eines Defekts in oder an einer Wandung eines Flugzeugs und eine solche Überwachungsvorrichtung, gelöst.

Durch ein solches Reparaturkit sind im Falle einer Reparatur sogleich sämtliche notwendigen Einzelteile zum Aufbau eines Reparaturpatches mit Überwachungsmöglichkeit verfügbar.

Ebenso löst ein Verfahren zum Überwachen eines Reparaturpatches in oder an einer Wandung eines Luftfahrzeugs mittels einer solchen Überwachungsvorrichtung mit den Schritten: Erkennen einer Messphase anhand der von der Energieversorgung bereitgestellten Energiemenge; Messen von Belastungsparametern in und/oder an dem Reparaturpatch während der Messphase; Auslesen der Belastungsparameter die Aufgabe.

Das erfindungsgemäße Verfahren ermöglicht es, in besonders interessanten Abschnitten des Fluges eine Messung der Belastung des Reparaturpatches durchzuführen. Je nach Ausgestaltung der Energieversorgungseinrichtung hängt die bereitgestellte Energiemenge beispielsweise von der aktuellen Flugphase ab.

Vorteilhafte Ausgestaltungen sind Gegenstand der Unteransprüche.

Vorteilhaft ist als Messphase eine Flugphase vorgesehen, während der das Luftfahrzeug eine Reiseflughöhe erreicht. In dieser Phase kann sowohl beobachtet werden, wie sich das Reparaturpatch bei Veränderung seiner Belastung verhält als auch, welcher Belastung das Reparaturpatch in der Reiseflughöhe ausgesetzt ist.

Die gemessenen Belastungsparameter können zunächst in der Datenspeichereinrichtung gespeichert werden und zu einem späteren Zeitpunkt aus gelesen werden. Dies erlaubt es, die Sensordaten zunächst während des Fluges zwischenzuspeichern und anschließend am Boden auszuwerten. Dadurch ist in dem Luftfahrzeug keine weitere Infrastruktur zur Datenspeicherung und Datenübertragung notwendig.

Die Erfindung wird nachfolgend anhand von Zeichnungen, welche die Erfindung schematisch illustrieren, näher beschrieben. Es zeigen im Einzelnen:
- Fig. 1a: Eine Draufsicht auf ein Reparaturpatch zum Reparieren eines Defekts in einem Verbundwerkstoff;
- Fig. 1b: eine Seitenansicht auf den Aufbau des Reparaturpatches aus Fig. 1 a;
- Fig. 2a: eine Seitenansicht auf den Aufbau einer Ausführungsform der Überwachungsvorrichtung;
- Fig. 2b: eine Draufsicht auf die Überwachungsvorrichtung aus Fig. 2a;
- Fig. 3: eine Blockschaltbild der Überwachungsvorrichtung aus Fig. 2a;
- Fig. 4: ein Diagramm, das Flugphase und von einer Energieversorgungseinrichtung erzeugte Energie in Relation zueinander setzt und
- Fig. 5: ein Diagramm einer Belastungsmessung durch die Sensoreinrichtung.

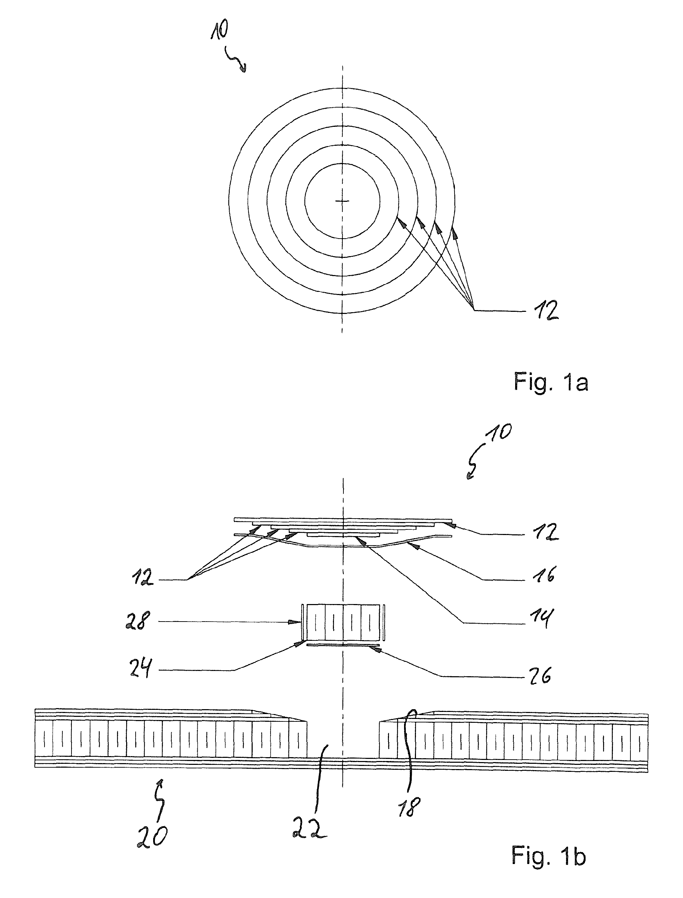

Mehrlagige Reparaturpatches 10, wie sie in den Fig. 1 a und 1 b gezeigt sind, werden für die Reparatur beschädigter Außenwandungen von Flugzeugen eingesetzt. Die gezeigten Reparaturpatches 10 sind für die Reparatur von Verbundwerkstoffen vorgesehen, es existieren aber ähnliche Aufbauten sowohl für Metall als auch für Kohlefaser-Verbundstoffe.

Mehrere Schichten 12 eines Reparaturmaterials sind konzentrisch zueinander und übereinander angeordnet. Soweit nötig, ist eine Füllschicht 14 vorgesehen. Ein Klebefilm 16 verbindet die Schichten 12,14 miteinander und mit einer Oberfläche 18 eines Verbundwerkstoffs 20. Um eine Öffnung 22 in dem Verbundwerkstoff 20 auszufüllen ist ein Stopfen 24 vorgesehen, die mittels eines Klebefilms 26 und eines Schaumklebers 28 in der Öffnung 22 befestigt wird.

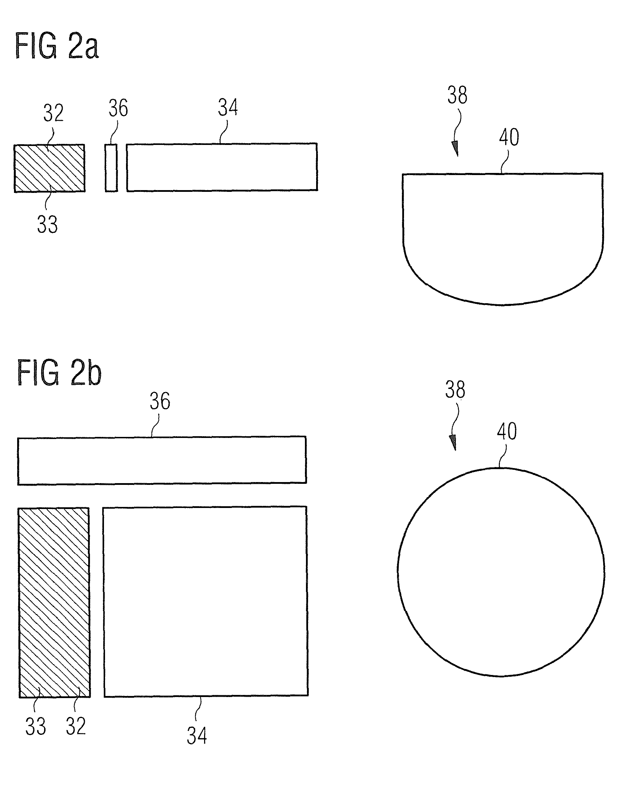

Eine in den Fig. 2b und 2b gezeigte Überwachungsvorrichtung 30 weist als Kommunikationseinrichtung 32 eine Antenneneinrichtung 33, Elektronik 34 sowie als Sensoreinrichtung einen Dehnungsmessstreifen 36 auf. Als Energieversorgungseinrichtung ist ein thermoelektrischer Generator 38 mit einer als Reservoir 40 ausgebildeten Wärmespeichervorrichtung vorgesehen.

Der Dehnungsmessstreifen 36 ist so angeordnet, dass er eine mechanische Dehnung des Reparaturpatches 10 misst. Aus den bekannten Materialparametern des Reparaturpatches 10 lässt sich aus den gemessenen Werten die mechanische Belastung des Reparaturpatches 10 errechnen.

Wenn das Luftfahrzeug, an dem die Überwachungsvorrichtung 30 eingesetzt wird, seine Flughöhe verändert, so verändert sich die Außentemperatur an dem Luftfahrzeug. Teile des Luftfahrzeuges, beispielsweise seine Außenhaut, gleichen ihre Temperatur dabei vergleichsweise zügig an die Außentemperatur an. Das Reservoir 40 hingegen benötigt einen längeren Zeitraum, um seine Temperatur an die Temperatur der Umgebung anzupassen.

Der thermoelektrische Generator 38 ist sowohl mit der Außenhaut als auch mit dem Reservoir 40 in Kontakt und erzeugt aus der Temperaturdifferenz zwischen diesen beiden Punkten eine Spannung, aufgrund welcher aus der Temperaturdifferenz Energie gewonnen werden kann. Aus dieser Energie wird die Elektronik 34 gespeist, so dass sie Messungen an dem Dehnungsmessstreifen 36 durchführen kann.

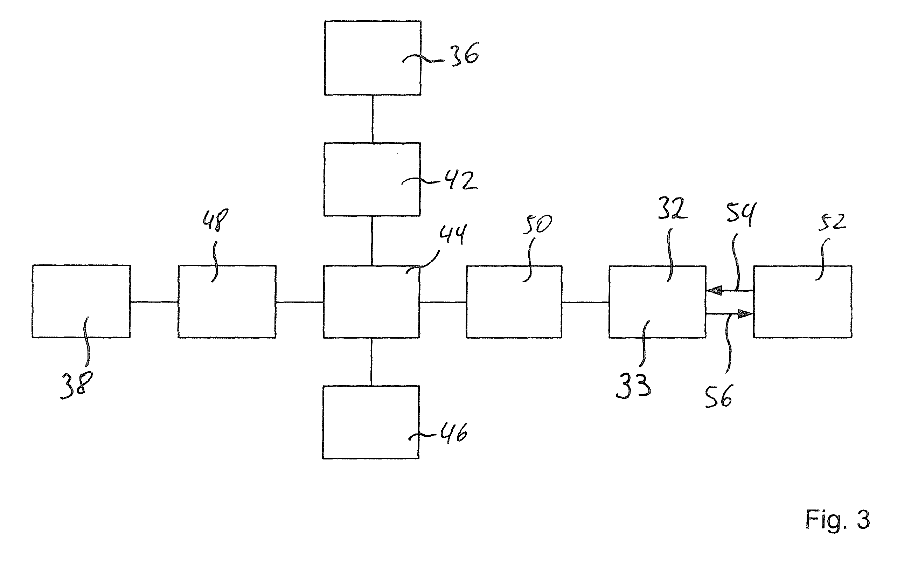

Wie in Fig. 3 gezeigt, weist die Elektronik 34 eine Sensoransteuerung 42, eine Datenverarbeitungseinrichtung 44, eine Datenspeichereinrichtung 46, eine Energiesteuerung 48 sowie einen Transceiver 50 auf.

Die Datenverarbeitungseinrichtung 44 überwacht mittels der Energiesteuerung 48 die Energieabgabe des thermoelektrischen Generators 38. Entspricht die Energieabgabe des thermoelektrischen Generators 38 einem vorher bestimmten Wert, liegt sie beispielsweise über einem Schwellwert, so startet die Datenverarbeitungseinrichtung 44 über die Sensorsteuerung 42 einen Messvorgang des Dehnungsmessstreifens 36. Die bei diesem Messvorgang ermittelten Sensordaten werden von der Datenverarbeitungseinrichtung 44 vorverarbeitet und komprimiert und dann in der Datenspeichereinrichtung 46 abgelegt.

Später, wenn das Luftfahrzeug wieder am Boden ist, werden die Sensordaten aus der Datenspeichereinrichtung 46 wieder ausgelesen. Eine Ausleseeinrichtung 52 kommuniziert zu diesem Zweck mit der Antenneneinrichtung 33 in der Art eines RFID. Der Antenneneinrichtung 33 wird also Energie 54 übertragen, die durch den Transceiver 50 und die Datenverarbeitungseinrichtung 44 zum Auslesen der Sensordaten aus der Datenspeichereinrichtung 46 genutzt wird. Die Daten 56 werden anschließend mittels Lastmodulation an die Ausleseeinrichtung 52 übertragen.

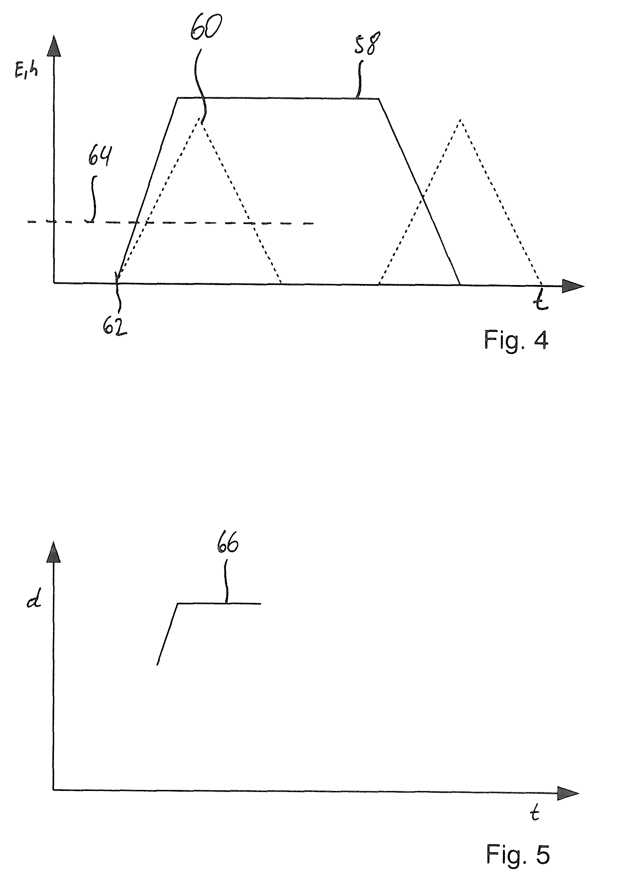

In Fig. 4 ist ein typisches Höhen- und Energieprofil eines Fluges des Luftfahrzeugs gezeigt. Das Höhenprofil 58 zeigt die Flughöhe h abhängig von der Zeit t an. Das durch die gestrichelte Linie angedeutete Energieprofil 60 zeigt, wie viel Energie E der thermoelektrische Generator 38 in Abhängigkeit von der Zeit t abgeben kann.

Ab dem Zeitpunkt eines Starts 62 des Luftfahrzeugs nimmt die Flughöhe h zunächst kontinuierlich zu, bis das Luftfahrzeug die Reiseflughöhe erreicht hat. Aufgrund der Temperaturdifferenz zwischen Außenhaut und Reservoir 40 nimmt die von dem thermoelektrischen Generator 38 lieferbare Energie E zunächst mit der Flughöhe h zu. Nach Erreichen der Reiseflughöhe gleicht sich die Temperatur des Reservoirs 40 langsam der Außentemperatur an, so dass die von dem thermoelektrischen Generator 38 lieferbare Energie E wieder abnimmt.

Bei Erreichen eines Schwellwerts 64, der den Beginn der Messphase markiert, startet die Datenverarbeitungseinrichtung 44 die Aufzeichnung von Sensordaten. Somit wird die Dehnungsbelastung des Reparaturpatches 10 während des Aufsteigens des Luftfahrzeugs aufgezeichnet. Nach Erreichen der Reiseflughöhe nimmt die verfügbare Energie E wieder ab, bis sie unter den Schwellwert 64 sinkt. Zu diesem Zeitpunkt beendet die Datenverarbeitungseinrichtung 44 die Messphase und somit die Aufzeichnung von Sensordaten.

In Fig. 5 ist das Ergebnis einer solchen Messphase beispielhaft gezeigt. Abhängig von der Zeit t wurde die Dehnung d aufgezeichnet, so dass sich ein Belastungsprofil 66 ergibt.

Die Sensoreinrichtung ist hier durch einen Dehnungsmessstreifen 36 realisiert. Die Art der verwendeten Sensoreinrichtung sowie ihre räumliche Ausrichtung sind unabhängig von den restlichen Komponenten der Überwachungsvorrichtung 30. Die Sensoreinrichtung kann sowohl senkrecht als auch parallel zu der Ausrichtung einer Defektstelle angeordnet werden und somit die mechanische Spannung in unterschiedlichen Richtungen messen. Ebenfalls ist es möglich, dass die Sensoreinrichtung zum Messen eines Drucks, einer Temperatur oder sonstiger Eigenschaften des Reparaturpatches 10 ausgebildet ist.

Unabhängig von den sonstigen Komponenten der Überwachungsvorrichtung 30 kann die Kommunikationseinrichtung 32 auch zur akustischen Datenübermittlung ausgebildet sein, beispielsweise mittels Körperschall. Zur Energieerzeugung in der Kommunikationseinrichtung 32 kann dabei ein Piezoelement verwendet werden.

Sofern die Datenübertragung von und zu der Antenneneinrichtung 33 mittels elektromagnetischer Felder geschieht, wird bevorzugt eine niedrige Frequenz, insbesondere kleiner 1 kHz, verwendet. Solche niederfrequenten elektromagnetischen Felder können auch Wandungen mit metallischem Inhalt durchdringen.

Die Reparaturpatches 30 können somit bezüglich ihrer Spannung, Dehnung und Last während des Fluges überwacht werden.

Dehnungssensor und Elektronik befinden sich auf einem Reparaturpatch 10 innerhalb des Flugzeugs. Die Dehnungsmessung erfolgt wenigstens einmal pro Flug in der maximalen Betriebshöhe. Die Messung dauert gewöhnlich 10 bis 30 Sekunden. Die Elektronik 34 weist eine Datenspeichereinrichtung 46 zur Aufnahme der maximalen Dehnung und der zugehörigen Zeit auf.

Die Überwachungsvorrichtung 30 hat eine Lebensdauer von bis zu 20 Jahren. Die in dem Datenspeicher gespeicherten Daten können mittels einer tragbaren Ausleseeinrichtung 52 drahtlos ausgelesen werden.

Die Energie für die Dehnungsmessung und die Aufzeichnung der Daten wird von einem thermoelektrischen Generator 38 bereitgestellt, der auf einer Seite mit der Außenhaut des Luftfahrzeuges und auf der anderen Seite mit einem Reservoir 40, das als Wärme- und/oder Kältespeicher dient und einen Speicherstoff aufweist, verbunden ist.

Der thermoelektrische Generator 38 erzeugt zusammen mit dem Reservoir 40 aufgrund seines asynchronen und nichtlinearen Arbeitsprinzips genau dann Energie, wenn die Messungen durchgeführt werden müssen, so dass das Energieversorgungsmodul als Höhenmesser und Auslöser der Messung fungieren kann. Dadurch werden für diese Aufgaben keine zusätzlichen Module benötigt, was Energie und Schaltkreise erspart.

Zur Messung werden in dieser Ausführungsform klassische Dehnungsmessstreifen verwendet, wobei Streifen mit hohem Widerstand aufgrund ihres niedrigeren Energieverbrauchs bevorzugt werden. Unabhängig von der weiteren Ausgestaltung der Überwachungsvorrichtung 10 können auch andere Arten von Sensoren verwendet werden.

Die Signalaufnahme wird mittels einer Sensorschnittstellenelektronik (Sensorsteuerung 42), die von einem Mikrocontroller (Datenverarbeitungseinrichtung 44) gesteuert wird, bewerkstelligt.

Die Vorverarbeitung des Signals sowie die Datenkompression und Speicherung erfolgen durch den Microcontroller. Der Datenspeicher kann sowohl in dem Microcontroller integriert sein als auch aus jedem geeigneten nichtflüchtigen Speicher separat aufgebaut sein.

Das Auslesen der Daten findet durch ein tragbares Gerät oder eine andere Einrichtung mittels niederfrequenten elektromagnetischen Feldern (<1 kHz, abhängig von dem Material) statt, die die metallische Haut des Luftfahrzeuges und das Reparaturpatch jedenfalls teilweise durchdringen.

Die elektromagnetischen Felder werden darüber hinaus dafür verwendet, den Transceiver 50 mit Energie zu versorgen.

Die Datenübermittlung wird durch Modulation der von dem tragbaren Gerät ausgestrahlten elektromagnetischen Felder bewerkstelligt (Lastmodulation).

In einer weiteren Ausgestaltung kann das Auslesen der Daten und die Energieübermittlung auch akustisch geschehen (wie bei einem Stethoskop).

Eine Ausleseeinrichtung kann an die Struktur des Luftfahrzeuges manuell oder mittels eines Saugnapfes befestigt werden, wenn eine längere Datenübertragung oder eine Aufladung vonnöten sind.

In Fig. 4 ist ein typisches Flugprofil zu sehen. Die gestrichelte Linie zeigt die von der Energieversorgungseinrichtung 38 erzeugte Energie. Die von der Energieversorgungseinrichtung 38 erzeugte Energiemenge E erreicht ihr Maximum kurz nachdem das Luftfahrzeug seine Reiseflughöhe erreicht hat. Dieser Bereich wird als Auslöser für die Belastungsmessung verwendet.

Ein Beispiel für eine solche Belastungsmessung ist in Fig. 5 gezeigt.

Durch die verschleißfreie Energieerzeugung ist die Überwachungsvorrichtung 30 sehr langlebig.

In dem Reservoir kann ein Medium vorgesehen sein, das in dem überstrichenen Temperaturbereich seine Phase wechselt, so dass das Reservoir besonders träge auf Temperaturschwankungen reagiert. Die auf einem Phasenwechsel basierende Energieversorgungseinrichtung liefert die Energie genau dann, wenn diese für die Messung benötigt wird. Zum Einschalten der Sensoreinrichtung wird kein Höhenmesser benötigt.

Die Verwendung von niedrigen Frequenzen zum Auslesen der Sensordaten erlaubt das Auslesen durch metallische Oberflächen (Metall oder Kohlenstoff-Verbundwerkstoffe).

Die Messdaten können auch mittels akustischer Kommunikation übertragen werden. Ebenso ist es möglich, die Energieübertragung mittels akustischer Wellen zu bewerkstelligen.

Die Erfindung erlaubt es, mit geringem Aufwand eine Messung von Betriebsparametern eines Reparaturpatches an einem Luftfahrzeug durchzuführen, wobei die verwendeten Vorrichtungen eine lange Lebensdauer aufweisen.

### Bezugszeichenliste

- 10: Reparaturpatch
- 12: Schicht
- 14: Füllschicht
- 16: Klebefilm
- 18: Oberfläche
- 20: Verbundwerkstoff
- 22: Öffnung
- 24: Stopfen
- 26: Klebefilm
- 28: Schaumkleber
- 30: Überwachungsvorrichtung
- 32: Kommunikationseinrichtung
- 33: Antenneneinrichtung
- 34: Elektronik
- 36: Dehnungsmessstreifen (Sensoreinrichtung)
- 38: Thermoelektrischer Generator (Energieversorgungseinrichtung)
- 40: Reservoir (Wärmespeichervorrichtung)
- 42: Sensorsteuerung
- 44: Datenverarbeitungseinrichtung
- 46: Datenspeichereinrichtung
- 48: Energiesteuerung
- 50: Transceiver
- 52: Ausleseeinrichtung
- 54: Energie
- 56: Daten
- 58: Höhenprofil
- 60: Energieprofil
- 62: Start
- 64: Schwellwert
- 66: Belastungsprofil

- E: Energie
- h: Flughöhe
- t: Zeit

## Patentansprüche

1. Überwachungsvorrichtung (30) für ein Reparaturpatch (10), das zum Reparieren eines Defekts an oder in einer Wandung eines Luftfahrzeugs einsetzbar ist, mit
einer Sensoreinrichtung (36) zum Erfassen von Eigenschaften des in der Wandung eingesetzten Reparaturpatches (10),
einer Energieversorgungseinrichtung (38) zum Versorgen wenigstens der Sensoreinrichtung (36) mit Energie,
einer Kommunikationseinrichtung (32), um ein Auslesen der Sensordaten zu ermöglichen, und
einer Datenverarbeitungseinrichtung (44) zur Verarbeitung der von der Sensoreinrichtung (36) generierten Daten;
**dadurch gekennzeichnet, dass**
die Datenverarbeitungseinrichtung (44) derart ausgebildet ist, dass zum Bestimmen des Beginns des Erfassens der Eigenschaften des Reparaturpatches (10) die Energieabgabe der Energieversorgungseinrichtung (38) überwacht wird und anhand der Information über die Energieabgabe eine vorbestimmte Flugphase identifiziert wird.

2. Überwachungsvorrichtung nach Anspruch 1, **dadurch gekennzeichnet, dass** die Energieversorgungseinrichtung einen thermoelektrischen Generator (38) aufweist.

3. Überwachungsvorrichtung nach Anspruch 2, **gekennzeichnet durch** eine Wärmespeichervorrichtung (40) für den thermoelektrischen Generator (38).

4. Überwachungsvorrichtung nach einem der voranstehenden Ansprüche, **gekennzeichnet durch** eine Datenspeichereinrichtung (46) zum Speichern der Sensordaten.

5. Überwachungsvorrichtung nach einem der voranstehenden Ansprüche, **dadurch gekennzeichnet, dass** die Kommunikationseinrichtung (32) zur drahtlosen Kommunikation ausgebildet ist.

6. Überwachungsvorrichtung nach einem der Ansprüche 4 bis 5, **dadurch gekennzeichnet, dass** die Datenverarbeitungseinrichtung (44) die Sensordaten zur Speicherung in der Datenspeichereinrichtung (46) komprimiert.

7. Überwachungsvorrichtung nach einem der voranstehenden Ansprüche, **dadurch gekennzeichnet, dass** die Sensoreinrichtung (36) zur Ermittlung einer mechanischen Spannung ausgebildet ist.

8. Überwachungsvorrichtung nach einem der voranstehenden Ansprüche, **dadurch gekennzeichnet, dass** die Kommunikationseinrichtung (32) fremdspeisbar ist.

9. In oder an einer Wandung eines Luftfahrzeugs zur Reparatur von Defekten einsetzbares Reparaturkit, umfassend ein Reparaturpatch (10) zum Reparieren eines Defekts in oder an einer Wandung eines Flugzeugs und eine Überwachungsvorrichtung (30) nach einem der voranstehenden Ansprüche.

10. Verfahren zum Überwachen eines Reparaturpatches (10) in oder an einer Wandung eines Luftfahrzeugs mittels einer Überwachungsvorrichtung (30) nach einem der Ansprüche 1 bis 9, **gekennzeichnet durch** die Schritte:
a) Erkennen einer Messphase anhand der von der Energieversorgungseinrichtung (38) bereitgestellten Energiemenge;
b) Messen von Belastungsparametern in und/oder an dem Reparaturpatch (10) während der Messphase;
c) Auslesen der Belastungsparameter.

11. Verfahren nach Anspruch 10, **dadurch gekennzeichnet, dass** als Messphase eine Flugphase vorgesehen ist, während der das Luftfahrzeug eine Reiseflughöhe erreicht.

12. Verfahren nach Anspruch 10 oder 11, soweit auf Anspruch 4 rückbezogen, **dadurch gekennzeichnet, dass** die gemessenen Belastungsparameter zunächst in der Datenspeichereinrichtung (46) gespeichert werden und zu einem späteren Zeitpunkt ausgelesen werden.

## Claims

1. A monitoring device (30) for a repair patch (10) that can be used for repairing a defect on or in a wall of an aircraft, comprising
a sensor device (36) for detecting properties of the repair patch (10) inserted into the wall,
an energy supply device (38) for supplying at least the sensor device (36) with energy,
a communication device (32) in order to enable the reading-out of sensor data, and
a data processing device (44) for processing the data generated by the sensor device (36);
**characterised in that**
the data processing device (44) is configured in such a manner that, in order to determine the start of the detection of the properties of the repair patch (10), the energy output of the energy supply device (38) is monitored and a predetermined flight phase is identified based on the information concerning the energy output.

2. The monitoring device according to claim 1, **characterised in that** the energy supply device comprises a thermoelectric generator (38).

3. The monitoring device according to claim 2, **characterised by** a heat storage device (40) for the thermoelectric generator (38).

4. The monitoring device according to any one of the preceding claims, **characterised by** a data storage device (46) for storing the sensor data.

5. The monitoring device according to any one of the preceding claims, **characterised in that** the communication device (32) is configured for wireless communication.

6. The monitoring device according to any one of the claims 4 to 5, **characterised in that** the data processing device (44) compresses the sensor data for storage in the data storage device (46).

7. The monitoring device according to any one of the preceding claims, **characterised in that** the sensor device (36) is configured for detecting a mechanical stress.

8. The monitoring device according to any one of the preceding claims, **characterised in that** the communication device (32) can be externally supplied.

9. A repair kit that can be used in or on a wall of an aircraft for repairing defects, comprising a repair patch (10) for repairing a defect in or on a wall of an airplane and a monitoring device (30) according to any one of the preceding claims.

10. A method for monitoring a repair patch (10) in or on a wall of an aircraft by means of a monitoring device (30) according to any one of the claims 1 to 9, **characterised by** the steps:
a) recognizing a measurement phase based on the amount of energy provided by the energy supply device (38);
b) measuring load parameters in and/or on the repair patch (10) during the measurement phase;
c) reading out the load parameters.

11. The method according to claim 10, **characterised in that** a flight phase during which the aircraft reaches a cruising altitude is provided as a measurement phase.

12. The method according to claim 10 or 11, insofar as they refer to claim 4, **characterised in that** the measured load parameters are first stored in the data storage device (46) and read out at a later point in time.

## Revendications

1. Dispositif de surveillance (30) pour un patch de réparation (10) utilisé pour réparer un défaut dans ou sur une paroi d'un engin volant comportant :
- une installation de capteur (36) pour saisir les propriétés du patch de réparation (10) appliqué à la paroi,
- une installation d'alimentation en énergie (38) pour alimenter en énergie au moins l'installation de capteur (36),
- une installation de communication (32) pour permettre la lecture des données de capteur, et
- une installation de traitement de données (44) pour traiter les données générées par l'installation de capteur (36),
**caractérisé en ce que**
l'installation de traitement de données (44) est réalisée pour déterminer le début de la saisie des propriétés du patch de réparation (10) en surveillant l'énergie fournie par l'installation d'alimentation en énergie (38) et en identifiant une phase de vol prédéfinie, à l'aide de l'information concernant la fourniture d'énergie.

2. Installation de surveillance selon la revendication 1,
**caractérisée en ce que**
l'installation d'alimentation en énergie comporte un générateur thermoélectrique (38).

3. Installation de surveillance selon la revendication 2,
**caractérisée par**
un dispositif de stockage de chaleur (40) pour le générateur thermoélectrique (38).

4. Installation de surveillance selon l'une des revendications précédentes,
**caractérisée par**
une installation de stockage de données (46) pour stocker les données de capteur.

5. Installation de surveillance selon l'une des revendications précédentes,
**caractérisée en ce que**
l'installation de communication (32) est réalisée pour communiquer par une liaison sans fil.

6. Installation de surveillance selon l'une des revendications 4 à 5, **caractérisée en ce que**
l'installation de traitement de données (44) comprime les données pour les enregistrer en mémoire dans l'installation de stockage de données (46).

7. Installation de surveillance selon l'une des revendications précédentes,
**caractérisée en ce que**
l'installation de capteur (36) est réalisée pour déterminer une tension mécanique.

8. Installation de surveillance selon l'une des revendications précédentes,
**caractérisé en ce que**
l'installation de communication (32) est alimentée de façon extérieure.

9. Kit de réparation applicable dans ou sur une paroi d'un engin volant pour réparer un défaut comprenant un patch de réparation (10) pour réparer un défaut dans ou sur une paroi d'un engin volant et un dispositif de surveillance (30) selon l'une des revendications précédentes.

10. Procédé de surveillance d'un patch de réparation (10) dans ou sur une paroi d'un engin volant à l'aide d'un dispositif de surveillance (30) selon l'une des revendications 1 à 9,
**caractérisé par** les étapes consistant à :
a) reconnaître une phase de mesure à l'aide de la quantité d'énergie fournie par l'installation d'alimentation en énergie (38),
b) mesurer des paramètres de charge dans et/ou sur le patch de réparation (10) pendant la phase de mesure,
c) lire les paramètres de charge.

11. Procédé selon la revendication 10,
**caractérisé en ce que**
comme phase de mesure on prévoit une phase de vol au cours de laquelle l'engin volant atteint son altitude de croisière.

12. Procédé selon la revendication 10 ou 11, dans la mesure où elles sont rattachées à la revendication 4,
**caractérisé en ce qu'**
on mémorise d'abord les paramètres de charge mesurés dans l'installation de stockage de données (46) et on les extrait à un instant ultérieur.
